# EUROPÄISCHE PATENTANMELDUNG

(11) **EP 3 591 176 A1**
(43) Veröffentlichungstag der Anmeldung: **08.01.2020**
(21) Anmeldenummer: 18181916.0
(22) Anmeldetag: 05.07.2018
(51) Int. Cl.: F01D 25/12, F01D 25/24, F01D 25/26, F16B 5/02, F16B 19/02, F16L 23/036

(54) **GEKÜHLTE FLANSCHVERBINDUNG FÜR EINE STRÖMUNGSMASCHINE**

(71) Anmelder: Siemens Aktiengesellschaft, 80333 München (DE)
(72) Erfinder: Zander, Uwe, 45475 Mülheim an der Ruhr (DE)

(57) **Zusammenfassung**

Die Erfindung betrifft eine Flanschverbindung (14) zur Verbindung von mindestens zwei Bauteilen, insbesondere einem Innengehäuseoberteil (5a) und einem Innengehäuseunterteil (5b), wobei die Flanschverbindung (14) ein Verbindungselement (15) aufweist, das als Stiftschraube ausgeführt ist, wobei die Stiftschraube eine durchgängige Durchgangsbohrung (22) aufweist, durch die ein Kühlmedium aus einem Abdampfraum (10) strömt, wobei jeweils eine Kapselmutter (23, 24) an den Enden der Stiftschraube angeordnet ist, wobei die Kapselmuttern (23, 24) Öffnungen (26, 27) zum Durchführen des Kühlmediums aufweisen.

## Beschreibung

Die Erfindung betrifft eine Flanschverbindung zur Verbindung von zumindest zwei Bauteilen, wobei die Bauteile einander gegenüberliegende Flansche aufweisen, wobei die Flanschverbindung ferner ein entlang einer Längsachse ausgebildetes Verbindungselement aufweist, wobei das Verbindungselement in in den Flanschen eingebrachte, zueinander fluchtende Bohrungen aufgenommen ist, wobei die Bohrungen in den Flanschen als Durchgangsbohrungen ausgestaltet sind, wobei das Verbindungselement als Stiftschraube ausgebildet ist.

Beim Betrieb von Dampfturbinen besteht das Bestreben nach möglichst hohen Dampfzuständen. Dabei werden bei unterschiedlichen Dampfdrücken, insbesondere im Hoch- und Mitteldruckbereich und je nach Turbinentyp Dampftemperaturen von mehr als 600°C angestrebt. Zur Beherrschung derart hoher Dampfzustände werden sowohl bezüglich des Turbinengehäuses als auch bezüglich der zur Verschraubung eines Gehäuseoberteils mit einem Gehäuseunterteil eingesetzten Bolzenschrauben hoch warmfeste Werkstoffe verwendet. Im Bereich der Teilfuge zwischen den beiden Gehäuseteilen besteht das dort flanschartig ausgebildete Innengehäuse bei diesen Temperaturen üblicherweise aus 9%-10%-Chrom-Stahl. Bei Verwendung eines Nickel-Basis-Werkstoffs für die in diesem Bereich eingesetzten, auch als Teilfugenschrauben bezeichneten Bolzenschrauben, ergeben sich bei derart hohen Dampftemperaturen unterschiedliche Wärmeausdehnungen der Bolzenschrauben und der Gehäuseflansche. Dies kann im Extremfall zu einem Anriss der Bolzenschrauben und somit zu einer Gefahrensituation oder Betriebseinschränkung führen. Bei Verwendung von Nickel-Basis-Legierungen als Schraubenwerkstoff kann als weiteres technisches Problem ein sogenanntes negatives Kriechen auftreten. Das bedeutet, dass eine in einem bestimmten Temperaturbereich eingesetzte vorgespannte Bolzenschraube aus einem Nickel-Basis-Werkstoff während eines Lebensdauerzeitraums kürzer und damit die Vorspannung mit der Folge eines Abrisses der Bolzenschraube größer wird. Des Weiteren ergeben sich aufgrund der unterschiedlichen Wärmeausdehnungskoeffizienten der Nicke-Basis-Werkstoffe gegenüber martensitischen Stählen Vorspannungsverluste verbunden mit potenziellen Dichtigkeitsproblemen in diesen Betriebszuständen, sofern die Elemente der Klemmverbindung (Schraube und Flansch) die gleiche Temperatur aufweisen -. Darüber hinaus sind derart hochwertige Schraubenwerkstoffe mit hohen Material- und Fertigungskosten verbunden.

Die Verschraubung von Gehäusehälften und Ventilteilen stellt im Turbinenbau ein wesentliches Konstruktionsmerkmal dar. Durch die Erhöhung der Dampfparameter, veränderte Konstruktion und optimierte Werkstoffausnutzung werden die Grenzen der aktuellen Turbosatzausführungen, beispielsweise bei sogenannten K, HMN, und E-TT-Turbinen, zum Teil bereits erreicht. K-Turbinen sind sogenannte Kompaktturbinen, bei denen Hoch- und Mitteldruck in einem Außengehäuse angeordnet sind, wobei die Abkürzung E bedeutet, dass Mittel- und Niederdruck in einem Außengehäuse angeordnet sind. Die Abkürzung TT bedeutet im Sinne der Erfindung Teilturbine, so dass mit E-TT eine Mitteldruckkomponente zusammen mit einer Niederdruckturbine angeordnet ist. Die Abkürzung HMN bedeutet im Sinne der Erfindung Hochdruck, Mitteldruck, Niederdruck.

In einigen konstruktiven Ausführungen, z. B. am Innengehäuse von K-TT-Turbinen, liegen im Einströmbereich am Innengehäuse eine hohe Temperatur und ein hoher Druck vor, während die Außenfasern des Innengehäuses mit niedrigeren Dampftemperaturen, die einhergehen mit dem Dampfzustand zwischen Innen- und Außengehäuse, beaufschlagt werden. Beispielsweise liegt eine Einströmtemperatur bei 600°C, wobei eine Dampfraumtemperatur in dem Bereich zwischen dem Innengehäuse und dem Außengehäuse bei ca. 300°C anliegt. Üblicherweise werden die Gehäusehälften bzw. die Ventilteile mittels Schraubverbindungen zu der Flanschverbindung verbunden. Hierbei ragen die Schraubenkörper bzw. die Schraubenmuttern bei durchgehenden Schrauben in den Raum der geringeren Dampfraumtemperatur beispielsweise 300°C. Da die Gehäusehälften üblicherweise aus einem wärmeleitenden Material bestehen, wird die Temperatur in dem Innengehäuse über das Material des Innengehäuses zur Schraube mittels Wärmeleitung und Strahlungsaustausch transportiert. Selbstverständlich treten hier gewisse Temperaturverluste auf, so dass die Schraubentemperatur kleiner ist als die Einströmtemperatur oder auch die im Durchgangsloch des Gehäuseflansches sich einstellende Temperatur. Allerdings ist die mittlere Schraubentemperatur größer als die Temperatur an den Außenfasern des Innengehäuses. Beispielsweise weist die Temperatur an den Außenfasern des Innengehäuses einen Betrag von ca. 450 - 480°C auf, wogegen die Schraube 30 - 50K wärmer sein könnte.

Durch diese relativ hohe Temperaturbelastung der Schraube weist die Flanschverbindung ein relativ ausgeprägtes Relaxationsverhalten (hoher Vorspannungsverlust über der Betriebszeit), hervorgerufen durch metallphysikalische Prozesse, auf. Hierdurch verringert sich die Tragfähigkeit der Flanschverbindung und insbesondere ihre Dichtigkeit gegenüber Dampfdurchtritt durch die Teilfuge, so dass Undichtigkeiten insbesondere in der Teilfuge zwischen den Gehäusehälften auftreten können, was ein Öffnen der miteinander verbundenen Bauteile (Teilfugen) des Außengehäuses nach relativ kurzer Standzeit bzw. Betriebszeit erforderlich macht, um die Schrauben im Innengehäuse nachzuspannen oder um eine neue Verbindung einzubauen.

Es ist üblich, das Oberteil und das Unterteil mittels einer Flanschverbindung miteinander zu verbinden, wobei die Flanschverbindung Bohrungen aufweist, in die Schrauben angeordnet werden. Damit eine gute Verbindung entsteht, werden die Schrauben vorgespannt. Zur Fügung der Bauteile werden verschiedene Schraubendesigns wie Kopfschrauben, Inbusschrauben, Stiftschrauben usw. eingesetzt. Bei Innengehäuseschrauben ist es sehr wahrscheinlich, dass diese im Einschraubgewinde mit Kontakt zum wärmeren Innengehäuse und damit auch an dem wärmeren Einschraubgewinde zugewandten Dehnschaftansatz wärmer sind als am gegenüberliegenden Gewinde der Kapselmutter, wo der die Mutter umspülende kältere Abdampf eine gewisse Wärmesenke darstellt.

Es ist daher Aufgabe der Erfindung, eine verbesserte Flanschverbindung anzugeben.

Gelöst wird diese Aufgabe durch eine Flanschverbindung zur Verbindung von zumindest zwei Bauteilen, wobei die Bauteile zueinander gegenüberliegende Flansche aufweisen, wobei die Flanschverbindung ferner ein entlang einer Längsachse ausgebildetes Verbindungselement aufweist, wobei das Verbindungselement in in den Flanschen eingebrachte, zueinander fluchtende Bohrungen aufgenommen ist, wobei die Bohrungen in den Flanschen als Durchgangsbohrung ausgestaltet sind, wobei das Verbindungselement als Stiftschraube ausgebildet ist, wobei das Verbindungselement eine Kühlbohrung aufweist, die im Wesentlichen entlang der Längsachse verläuft.

Durch ein geeignetes Mutterdesign an beiden Enden der Schraube wie z.B. bei einer Kapselmutter mit Durchgangsbohrung oder bei einer gewöhnlichen Sechskantschraube gegeben kann ein Medium zentral durch die komplette Schraubverbindung durchtreten.

Durch die Erfindung werden höhere Restvorspannungen nach gleicher Zeit oder verlängerte Inspektionsintervalle der Schrauben ermöglicht.

Mit der Erfindung wird der Ansatz verfolgt, Schrauben von der Durchgangsbohrung durch die Wechselwirkung mit dem durchströmenden Medium zu kühlen, was idealerweise zu einem höheren Schraubenpotential hinsichtlich Relaxationsendspannung führt. Durch die Kühlbohrung wird das Verbindungselement derart gekühlt, dass eine verbesserte Flanschverbindung bei gleichen Werkstoffen und gleichen Abmessungen möglich ist. Vorteilhafte weitere Ausprägungen sind in den Unteransprüchen angegeben.

In einer ersten vorteilhaften Weiterbildung ist die Kühlbohrung durchgängig ausgeführt. Das bedeutet, dass das Verbindungselement von einem Ende zum anderen Ende eine durchgängige Kühlbohrung aufweist. Durch diese Kühlbohrung kann ein Kühlmedium strömen.

Vorteilhafterweise ist das Verbindungselement an den Enden mit einer Kapselmutter verbunden. Dazu weist das Verbindungselement an den Enden jeweils ein Gewinde auf, das derart ausgebildet ist, dass das Gewinde der Kapselmutter in das Gewinde des Verbindungselementes an den Enden eingreift. Eine mechanisch günstige Verbindung ist dadurch möglich, da die Klemmlänge der Schraube gegenüber einem Einschraubgewinde verlängert wird.

Vorteilhafterweise weisen die Kapselmuttern jeweils eine Öffnung auf, die strömungstechnisch mit der Kühlbohrung der Schraube verbunden ist. Das bedeutet, dass im eingebauten Zustand eine mechanisch feste Verbindung dadurch erfolgt, dass die Verbindung Kapselmuttern und Schraube mit einer entsprechenden Vorspannung verschraubt werden. Die Kapselmuttern weisen jeweils eine Öffnung auf, die strömungstechnisch mit der Durchgangsbohrung in der Schraube fluchtet. Durch die Öffnungen kann ein Kühlmedium strömen, was insgesamt das Verbindungselement gegenüber einer nichtgebohrten oder nicht durchströmten Schraube zusätzlich kühlt. Dabei kann das Kühlmedium das ohnehin in diesem Raum befindliche Arbeitsmedium (z.B. der Abdampf) oder ein genau für diese Zwecke bereitgestelltes, kühlendes Medium (z.B. konditionierter Dampf aus einem anderen Druckraum entnommen)sein.

In einer weiteren vorteilhaften Weiterbildung sind die Bohrungen in den Flanschen als Durchgangsbohrungen derart ausgestaltet, dass zwischen dem Verbindungselement mit seinem Schaft in einer jeweiligen Innenwand der Durchgangsbohrung ein radialer Spalt gebildet ist, in der eine thermisch isolierende Hülse derart angeordnet ist, dass ein Wärmeübergang von den in der Regel wärmeren Flanschen zu der Schraube zumindest verringert wird.

Durch diese thermisch isolierende Hülse wird die entsprechend gegen Strahlungseinfluss gekapselte Schraube thermisch weniger belastet, was zu einer Erhöhung der Lebensdauer und zu geringerer Relaxation verbunden mit einer längeren Aufrechterhaltung der gewünschten Vorspannung führen kann.

Vorteilhafterweise ist die Flanschverbindung mit einem Sicherungselement derart weiter ausgebildet, dass zum Sichern einer Kapselmutter ausgebildet ist und mit dem Bauteil derart verbunden ist, dass ein ungewünschtes Mitdrehen der Kapselmutter während der Einbringung des Vorspann- bzw. Lösemomentes verhindert wird.

Auf der Flanschunterseite muss bei horizontaler Lage der Flansche die Kapselmutter gegen Herunterfallen gesichert werden, was mit dem Sicherungselement erfolgt. Außerdem kann mit dem Sicherungselement bei Montage und Demontage die Kapselmuster fixiert werden. Das Bauprinzip kann aber auch gleichermaßen an vertikal angeordneten Teilfugen von Gehäusen eingesetzt werden.

In einer vorteilhaften Weiterbildung bildet die Flanschverbindung eine Verbindung zwischen einem Innengehäuseunterteil und einem Innengehäuseoberteil, wobei um das Innengehäuse ein Außengehäuse angeordnet ist und zwischen dem Innengehäuse und dem Außengehäuse ein Abdampfraum gebildet ist, in dem sich ein Dampf mit gegenüber der Einströmung geringeren Temperaturen und Drücken befindet. Vorteilhafterweise wird die Kühlbohrung strömungstechnisch günstig mit dem Abdampfraum verbunden bzw. das erwartete Strömungsfeld gewährleistet ein hinreichend gutes An- und Durchströmen der Kühlbohrung. Dadurch strömt sozusagen der Dampf im Abdampfraum als Kühlmedium durch das Verbindungselement und kühlt dadurch das Verbindungselement.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: eine Querschnittansicht (Längsschnitt) einer Teilturbine
- Figur 2: eine Querschnittansicht in Strömungsrichtung eines Außengehäuses und eines Innengehäuses
- Figur 3: Darstellung einer erfindungsgemäßen Flanschverbindung

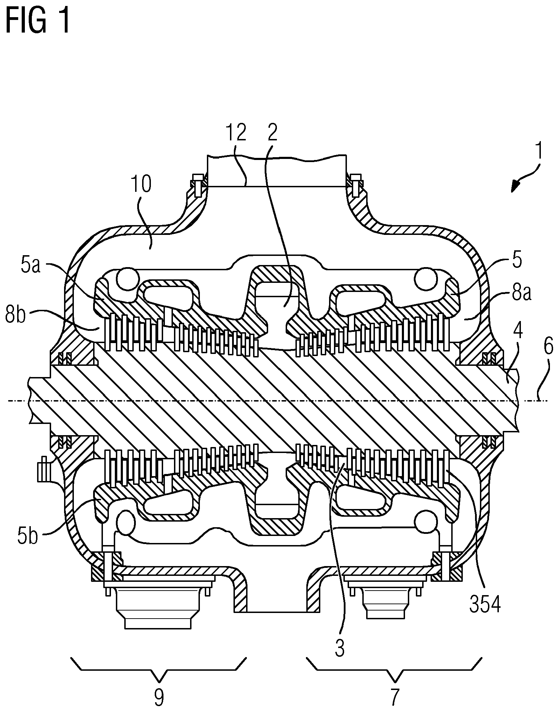

Die Figur 1 zeigt eine Querschnittansicht einer Dampfturbine 1, wobei die Dampfturbine 1 als Beispiel eine Strömungsmaschine darstellt. Die Dampfturbine 1 gemäß Figur 1 stellt eine zweiflutige Mitteldruckteilturbine dar. Das bedeutet, dass ein in einen Einströmbereich 2 zwischen Rotor 4 und Innengehäuse 5 einströmender Dampf in einen Strömungskanal 3 strömt, der zwischen einem Rotor 4 und einem Innengehäuse 5 angeordnet ist. Das Innengehäuse 5 umfasst ein Innengehäuseoberteil 5a und ein Innengehäuseunterteil 5b. Der Rotor 4 ist um eine Rotorachse 6 drehbar gelagert. Der in den Strömungskanal 3 strömende Dampf strömt hierbei in einer ersten Flut 7 vom Einströmbereich in einen Ausströmbereich 8a. Des Weiteren strömt der in den Einströmbereich 2 einströmende Dampf durch die linke Flut 9 in einen weiteren Ausströmbereich 8b. Die thermische Energie des Dampfes wird hierbei in mechanische Rotationsenergie des Rotors 4 umgewandelt. Der aus dem Ausströmbereich 8a und 8b ausströmende Dampf gelangt in einen Abdampfraum 10. Dieser Abdampfraum 10 ist zwischen dem Innengehäuse 5 und einem Außengehäuse 11 angeordnet. Der im Abdampfraum 10 befindliche Dampf strömt über einen Ausgangsstutzen 12 zu einer weiteren Teilturbine, insbesondere Niederdruckteilturbine.

Die in Figur 1 dargestellte Dampfturbine 1 ist nur exemplarisch zu betrachten. Die Erfindung bezieht sich auch auf andere Ausführungsformen einer Dampfturbine 1, wie beispielsweise eine K-Turbine. Bei einer K-Turbine ist eine erste Flut als HD-Bereich ausgebildet. Nach dem Durchströmen des HD-Bereiches strömt der Dampf zu einem Zwischenüberhitzer. Im Zwischenüberhitzer wird der Dampf auf eine höhere Temperatur gebracht. Nach dem Zwischenüberhitzer strömt der Dampf wieder in die K-Turbine in einen Einströmbereich eines Mitteldruck-Bereiches, der strömungstechnisch mit einer zweiten Flut verbunden ist, die entgegengesetzt zur ersten Flut ausgebildet ist.

Das Innengehäuseoberteil 5a und das Innengehäuseunterteil 5b weist einen in der Figur 1 nicht sichtbaren Flansch auf. Das Gehäuseoberteil 5a und das Gehäuseunterteil 5b wird mittels einer Schraubverbindung im Flanschbereich miteinander verschraubt.

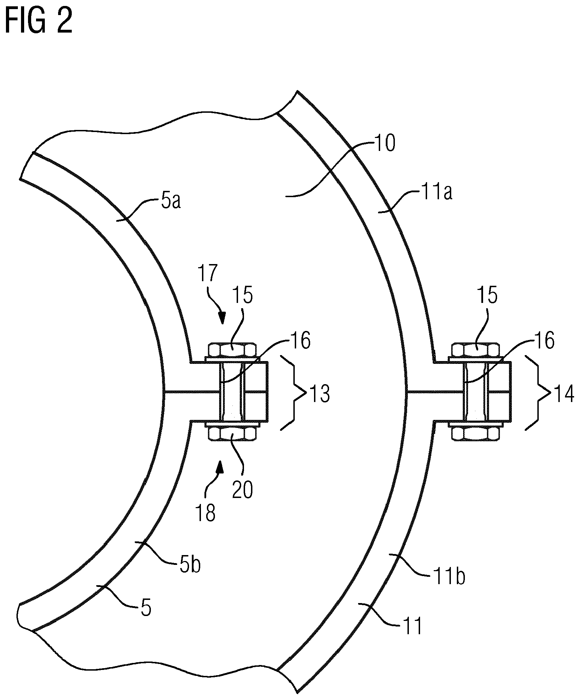

Die Figur 2 zeigt in schematisierter Form das Außengehäuse 11 und das Innengehäuse 5. Das Innengehäuseoberteil 5a ist über einen Flanschbereich 13 mit dem Innengehäuseunterteil 5b verbunden, hier als Flanschpaar ausgebildet gezeigt, wobei jede Gehäusehälfte einen Flansch beinhaltet.

Das Außengehäuse umfasst ein Außengehäuseoberteil 11a und ein Außengehäuseunterteil 11b. Das Außengehäuseoberteil 11a ist ebenfalls über eine Flanschverbindung 14 mit dem Außengehäuseunterteil 11b verbunden. Der Flansch 13 weist ein Verbindungselement 15 auf, das als Stiftschraube ausgebildet ist. Die Stiftschraube 15 ist in einer Durchgangsbohrung 16 angeordnet. Die Durchgangsbohrung 16 ist im Gehäuseoberteil 5a und im Innengehäuseunterteil 5b angeordnet. Die Durchgangsbohrung 16 ist eine Bohrung in den Flanschen, wobei die Bohrungen zueinander fluchtend ausgebildet sind.

Das Verbindungselement 15 weist an einem oberen Ende 17 eine Mutter auf. An einem unteren Ende 18 weist das Verbindungselement ebenfalls eine Mutter 20 auf. Die Flanschverbindung 14 zwischen Außengehäuseoberteil 11a und Außengehäuseunterteil 11b ist äquivalent zum Flansch 13 zwischen Innengehäuseoberteil 5a und Innengehäuseunterteil 5b ausgebildet dargestellt, kann aber auch hiervon im Detail abweichen.

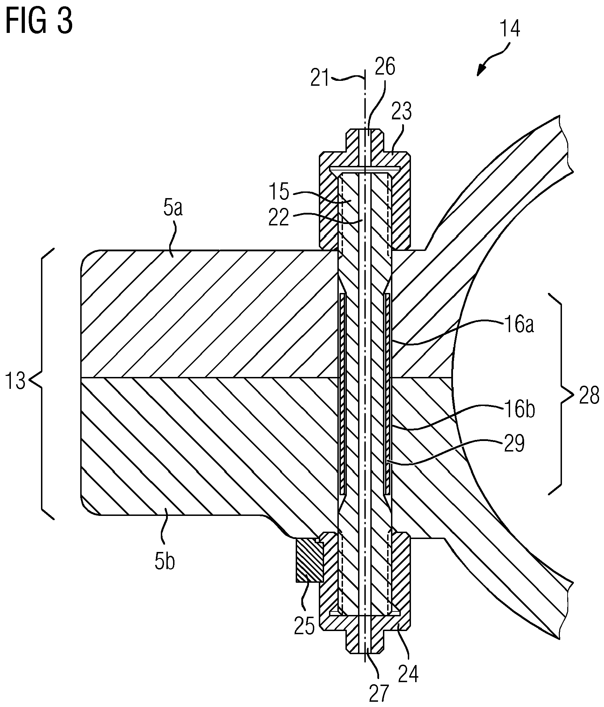

Die Figur 3 zeigt eine vergrößerte Schnittansicht einer erfindungsgemäßen Flanschverbindung 14. Die Flanschverbindung 14 weist ein erstes Bauteil 21 auf, das als Innengehäusebauteil 5a ausgebildet ist. Des Weiteren weist die Flanschverbindung 14 ein zweites Bauteil auf, das als Innengehäuseunterteil 5b ausgebildet ist. Die Bauteile weisen einander gegenüberliegende Flansche auf. Die Flanschverbindung 14 weist ferner ein entlang einer Längsachse 21 ausgebildetes Verbindungselement 15 auf. Das Verbindungselement 15 ist in den Flanschen eingebracht und zwar in zueinander fluchtende Bohrungen 16a und 16b.

Das Verbindungselement 15 ist als Stiftschraube ausgebildet und weist eine Kühlbohrung 22 auf. Die Kühlbohrung 22 ist im Wesentlichen derart ausgebildet, dass diese im Wesentlichen entlang der Längsachse 21 verläuft. Die Kühlbohrung 22 verläuft durchgängig durch das Verbindungselement 15.

An den Enden 17, 18 ist jeweils eine Kapselmutter 23 und 24 angeordnet. Die Kapselmutter 23 und die Kapselmutter 24 müssen mit der Schraube - z.B. mit einem entsprechenden Drehmoment verspannt werden, damit das Innengehäuseoberteil 5a und das Innengehäuseunterteil 5b entsprechend fest miteinander verbunden sind.

Damit bei der Montage oder Demontage die untere Kapselmutter 24 schwerkraftbedingt nicht herunterfällt, wird ein Sicherungselement 25 an das Innengehäuseunterteil 5b angebracht.

Die Kapselmuttern 23, 24 weisen jeweils eine Öffnung 26 und 27 auf. Durch diese Öffnungen 26 und 27 strömt ein im Abdampf befindlicher Dampf 10 hindurch, so dass ein Kühleffekt dadurch entsteht, dass der Kühldampf von der oberen Kapselmutter in die Öffnung 26 strömt und aus der unteren Kapselmutter 24 aus der unteren Öffnung 27 strömt, bzw. je nach Anströmung auch in umgekehrter Richtung. Die Kapselmuttern könnten in einer weiteren Ausprägung auch gewöhnliche Sechskantmuttern sein.

Das Verbindungselement 15 weist einen Schaft 28 auf. Der Schaft 28 weist wie bei Dehnschaftschrauben üblich einen geringfügig geringeren Durchmesser auf als die Durchgangsbohrung 16, so dass ein radialer Spalt zwischen einer Innenwand der Durchgangsbohrung 16 und dem Schaft 28 entsteht. Um den Schaft 28 wird eine isolierende Hülse 29 angebracht, welche in etwa die Länge des Schaftes 28 hat, bzw. geringfügig kürzer ist als dieser. Die isolierende Hülse 29 weist einen Abstand zwischen der Hülse 29 und der Innenwand der Durchgangsbohrung 16 auf. In diesem Abstand befindet sich kein Material.

Zwischen der Hülse 29 und dem Verbindungselement 15 ist ebenfalls ein Abstand, in dem sich ebenfalls kein Material befindet.

Der Durchmesser der Durchgangsbohrung 16 und Länge des Verbindungselementes 15 sind derart zueinander angepasst, dass der aus dem Abdampfraum 10 in die Durchgangsbohrung 16 strömende Dampf dazu führt, dass das Verbindungselement 15 gekühlt wird. Die Wärmestrahlungsbarriere, die in der Figur 3 durch eine Hülse 29 dargestellt ist, kann auch dadurch erfolgen, dass der Schaft 28 der Schraube mit einer Isolierschicht versehen wird. Beispielsweise kann hier eine Wärmedämmschicht ausgebildet sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Z.B. ist die Verwendung der Idee ohne die Strahlungsbarriere der Hülse 29 denkbar, nur nicht gleichermaßen wirksam hinsichtlich Absenkung der Schraubentemperatutur wie im Fall mit Verwendung der Hülse.

## Patentansprüche

1. Flanschverbindung (14) zur Verbindung von zumindest zwei Bauteilen,
wobei die Bauteile einander gegenüberliegende Flansche aufweisen,
wobei die Flanschverbindung (14) ferner ein entlang einer Längsachse (21) ausgebildetes Verbindungselement (15) aufweist,
wobei das Verbindungselement (15) in in den Flanschen eingebrachte, zueinander fluchtende Bohrungen (16) aufgenommen ist,
wobei die Bohrungen (16) in den Flanschen als Durchgangsbohrungen ausgestaltet sind,
wobei das Verbindungselement (15) als Stiftschraube ausgebildet ist,
**dadurch gekennzeichnet, dass**
das Verbindungselement (15) eine Kühlbohrung (22) aufweist, die im Wesentlichen entlang der Längsachse (21) verläuft.

2. Flanschverbindung (14) nach Anspruch 1,
wobei die Kühlbohrung (22) durchgängig ausgeführt ist.

3. Flanschverbindung (14) nach Anspruch 1 oder 2,
wobei das Verbindungselement (15) an den Enden mit einer Kapselmutter (23, 24) verbunden ist.

4. Flanschverbindung (14) nach einem der vorhergehenden Ansprüche,
wobei die Kapselmuttern (23, 24) jeweils eine Öffnung (26, 27) aufweisen, die strömungstechnisch mit der Kühlbohrung (22)in der Schraube fluchtend angeordnet sind.

5. Flanschverbindung (14) nach einem der vorhergehenden Ansprüche,
wobei die Bohrungen (16) in den Flanschen als Durchgangsbohrungen derart ausgestaltet sind, dass zwischen dem Verbindungselement (15) mit seinem Schaft (28) und einer jeweiligen Innenwand der Durchgangsbohrung ein radialer Spalt gebildet ist, in der eine thermisch isolierende Hülse (29) derart angeordnet ist, dass ein Wärmeübergang von den wärmeren Flanschen zu dem Verbindungselement (15)über Strahlungsaustausch zumindest verringert wird.

6. Flanschverbindung (14) nach einem der vorhergehenden Ansprüche,
mit einem Sicherungselement, (25) dass zum Sichern einer Kapselmutter (23, 24) ausgebildet ist und mit dem Bauteil derart verbunden ist, dass ein unerwünschtes Drehen der Kapselmutter (24) verhindert ist.

7. Strömungsmaschine, insbesondere Dampfturbine (1),
wobei die Strömungsmaschine ein Außengehäuse (11) und ein Innengehäuse (5) sowie einen drehbar gelagerten Rotor (4) umfasst,
wobei das Innengehäuse (5) eine Flanschverbindung (14) nach einem der vorhergehenden Ansprüche aufweist,
wobei zwischen dem Innengehäuse (5) und dem Außengehäuse (11) ein Abdampfraum (10) angeordnet ist,
wobei die Kühlbohrung (22) strömungstechnisch mit dem Abdampfraum (10) verbunden ist.
